# EUROPEAN PATENT APPLICATION

(11) **EP 4 687 076 A1**
(43) Date of publication of application: **04.02.2026**
(21) Application number: 24192082.6
(22) Date of filing: 31.07.2024
(51) Int. Cl.: G06N 3/088, G06N 3/096

(54) **AUTONOMOUSLY RECALIBRATING AN ML-BASED TOOL APPLIED IN AN INDUSTRIAL ENVIRONMENT**

(71) Applicant: Siemens Aktiengesellschaft, 80333 München (DE)
(72) Inventor: Büttner, Florian, 60316 Frankfurt (DE); Decker, Thomas, 85716 Unterschleißheim (DE); Köbler, Alexander, 90461 Nürnberg (DE); Thon, Ingo, 85630 Grasbrunn (DE)
(74) Representative: Siemens Patent Attorneys

(57) **Abstract**

Assistance apparatus and computer-implemented method for autonomously recalibrating an ML-based tool (Ms) comprising a machine learning model which is trained with sensor data collected from a source system, comprising the steps:
- receiving (S1)
a) source data instances (SD) collected from the source system,
b) information (INF) about the at least one changed characteristic in the source system,
c) target data instances (TD) collected in a target system, the target system is configured with at least one changed characteristic compared to the source systems,

- transferring (S2) labels (L) from the source data in-stances (SD) to the target data instances (TD) using a label transfer tool,
- identifying (S3) critical target data instances (cTD) where predictions generated by the ML-based tool for the target data instances (TD) mismatch with the transferred labels for the target data instances (TD),
- identifying (S4) at least one critical component (cC) of the critical target data (cTD) instances that leads to the mismatch,
- generating (S5) a calibration signal (CS) depending on the critical component (cC) and the information (INF) about the changed characteristics in the target system,
- recalibrating (S6) the ML-based tool (Ms) using the calibration signal (CS) resulting in a target ML-based tool, and
applying (S7) the target ML-based tool in the target system (Mt).

## Description

### Field of the Invention

The present disclosure relates to a computer-implemented method for autonomously recalibrating an ML-based tool comprising a machine learning model which is trained with sensor data collected from a source system, a system performing the method as well as a respective computer program product.

### Background

Production environments and processes tend to become ever more dynamic and modular, e.g., to account for high product variations. This creates major challenges for the application of machine learning tools based on machine learning models which in many cases extract their knowledge from a static data set often gathered long before deployment. The deployed machine learning tool on the other hand is faced with a changing data distribution due to changed characteristics in the environment, e.g., changed settings or wear of a manufacturing process or device or even the production of a new product variation. Alternatively, one might even want to deploy the machine learning tool to a new environment it is not trained on, e.g., a condition monitoring system is deployed to a new motor in a totally new facility. For both cases an adaptation of the trained machine learning model in the ML-based tool is required.

However, adapting the model by naively gathering and labelling new data instances in the changed environment is highly laborious and opens the door for the ML model to learning new brittle behaviour. The ML model may be relying on new spurious correlations or picking up a different reasoning process after complete retraining. Such a retraining might also trigger the necessity to reestablish its reliability with extensive testing. This issue becomes even more severe for ML tools whose reasoning process is verified or even certified, where changes might imply a very expensive auditing process.

Furthermore, tuning the ML model to new data without any constraints given by the previous task can lead to catastrophic forgetting, describing that the model after being adapted to the new task might not well work on the previous one anymore.

Lastly, the most obvious downside of adapting the ML model via extensive new data in the new domain, is the large number of required data points and the connected labelling effort as well as the computational costs for the training. This often prevents the adaptation of the model being executed on a smaller edge device.

Disregarding the mentioned drawbacks, one reason why this inefficient adaptation approach is used for ML tools is given by ML solutions being only loosely integrated in the automation environment, e.g., in existing Manufacturing Execution System (MES), engineering frameworks or supervisory control and data acquisition system (SCADA). Where other conventional automation systems are often automatically adapted according to changed requirements communicated by a higher level of the automation system.

Therefore, it is an object of the present invention to enable a more efficient and automated adaptation of deployed ML tools to changed characteristics of the industrial system they are applied to.

### Brief Summary of the Invention

This object is solved by the features of the independent claims. The dependent claims contain further embodiment of the invention.

A first aspect concerns a computer-implemented method for autonomously recalibrating an ML-based tool comprising a machine learning model which is trained with sensor data collected in a source system and applied to perform a task in an industrial environment, comprising the steps:
- receiving source data instances collected from the source system, target data instances collected in a target system, wherein the target system is configured with at least one changed characteristic compared to the source systems, and information about the at least one changed characteristic,
- transferring labels from the source data instances to the target data instances using a label transfer tool,
- identifying critical target data instances where predictions generated by the ML-based tool for the target data instances mismatch with the transferred labels for the target data instances,
- identifying at least one critical component of the critical target data instances that leads to the mismatch,
- generating a calibration signal depending on the critical component and the information about the changed characteristics in the target system,
- recalibrating the ML-based tool using the calibration signal resulting in a target ML-based tool, and
- applying the target ML-based tool in the target system.

Advantageously, the presented method identifies specific data instances generated by an altered data generation process in the new environment, i.e. in the target system which are critical when applying the ML-based tool. The system is thereby capable to identify those critical data instances without the need to generate ground truth labels in the target system, which is very important to allow for an automated process without human intervention. Recalibrating the ML tool with the recalibrating signal, which is limited to the critical component of the critical data instances and the information about the changed characteristics in the target system allows to adapt the target model as little as possible to maintain source model reliability and trustworthiness. Consequently, the recalibration is optimized with respect to processing effort which allows to perform recalibration in edge devices of reduced processing power.

### Description of Embodiments

In an embodiment of the method the information is received from a system monitoring and/or control unit of the source system and/or target system. The method is performed in predefined time intervals and/or when information about changed characteristic in the target system is received.

Advantageously, the monitoring unit and/or control unit holds the most recent data on the source and target system which ensures that the latest changes and details on the characteristics of the changes in the target system are input into the recalibration process. This ensures the reliability of the input information. Recalibrating in predefined intervals allows to detect also smaller changes in the characteristics of the source system or continuous degradation, like wear.

In an embodiment the source data instances are labelled training data, or the source data instances are unlabelled data instances and labels are generated by the ML-based tool trained for the source system.

The different origin of the source data instance provides flexibility depending on the circumstances of the target system. Further no manual labelling is required saving time and cost for the generation of labelled source data.

In an embodiment label transfer tools are one of optimal transport, unsupervised domain adaptation or active domain adaptation methods.

In an embodiment the at least one critical component of the critical target data instances is identified using an Explainable AI method, preferably model-agnostic explainable AI methods, preferably one of Shapley Additive explanations SHAP, feature importance, Local Interpretable Model-Agnostic Explanations LIME.

These are publicly available tools reducing the effort to adaptation into the recalibration system.

In an embodiment, critical target data instances are identified by selecting data instances located between a first decision boundary of the predictions generated by the ML-based tool for the target data and a second decision boundary derived from the transferred labels.

This step requires low processing capacity and contributes to perform recalibration on edge devices having moderate processing capacity.

In an embodiment the recalibration is performed by adapting a reasoning process of the source Al-tool with respect to the critical component, preferably by applying a constrained optimization to the ML model enforcing explanations of the ML model to keep constant outside of the critical components of the critical instance, whilst keeping performance on source instances constant.

This adaptation of the ML model of the ML-based tool requires no or minimal manual effort.

A second aspect concerns an assistance apparatus comprising at least one processor configured to autonomously recalibrating an ML-based tool which is trained with sensor data collected from a source system and applied to perform a task in an industrial environment, comprising the steps:
- receiving source data instances collected from the source system, target data instances collected in a target system, wherein the target system is configured with at least one changed characteristic compared to the source systems, and information about the at least one changed characteristic,
- transferring labels from the source data instances to the target data instances using a label transfer tool,
- identifying critical target data instances where predictions generated by the ML-based tool for the target data instances mismatch with the transferred labels for the target data instances,
- identifying at least one critical component of the critical target data instances that leads to the mismatch,
- generating a calibration signal depending on the critical component and the information about the changed characteristics in the target system,
- recalibrating the ML-based tool using the calibration signal resulting in a target ML-based tool, and
- applying the target ML-based tool in the target system.

In an embodiment the assistance apparatus comprises a surveillance interface configured to receive the information from a manufacturing monitoring unit or manufacturing control unit, and a data interface configured to receive source data in-stances from the source system and target data instances from the target system, wherein the target system is configured with changed characteristics compared to the source systems.

In an embodiment the assistance apparatus further comprises a user interface configured for receiving at least one of domain knowledge for identifying critical components of the critical target data instances correlating with the information on the changed characteristics in the target system.

The user interface allows the input of domain knowledge from a domain expert. This provides flexibility in terms of the origin of information and input of domain knowledge for unknown or extraordinary changes of characteristics in the target system.

A third aspect concerns a computer program product directly loadable into an internal memory of at least one digital computer, comprising software code portions for performing the above-mentioned steps when said product is run on said at least one digital computer.

### Brief description of the drawings

The invention will be explained in more detail by reference to accompanying figures. Similar objects will be marked by the same reference signs.
- Figure 1: schematically illustrates an embodiment of the inventive method as a flow chart.
- Figure 2: schematically illustrates an embodiment of identifying critical target data instances of the inventive method.
- Figure 3: schematically illustrates an embodiment of the inventive assistance apparatus applied in an industrial environment.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional module described for an apparatus can perform a functional step of the related method and vice versa.

Throughout this document when stating "the ML model" or "model" these expressions address the machine learning model contained in the ML-based tool.

### Description of Examples

Production environments and processes tend to become ever more dynamic and modular, e.g., to account for high product variations. This creates major challenges for the application of machine learning tools which in many cases extract their knowledge, i.e., the models were trained with a static data set often gathered long before deployment. The deployed machine learning tools on the other hand is faced with changing data distribution due to a changed environment.

The most common current solution when detecting a drift in the input data of a deployed machine learning model is given by naively gathering a sufficient amount of new data samples in the new setting and undergoing a laborious manual labelling process. The generated new data set is then used to either train a new model or fine-tune the old model with respect to the new setting. Aside of the manual effort involved in this approach, this can also lead to unexpected behaviour of the retrained machine learning model, because the adaptation is not restricted to actual causal changes but can also pick up spurious correlations in the new data. This yields the need for extensive testing of the model after every adaptation.

The adaptation of conventional automation systems, on the other hand is way more targeted, where parameter settings and thresholds in single devices of the automation system are adapted by central units like a Manufacturing execution system MES or a SCADA system, e.g., caused by producing a different product. One further object of the proposed method aims to enable ML-based tools to profit from this central execution system. It allows to autonomously adapt a trained machine learning model to a changed application domain, e.g., a model deployed on the shopfloor faces a change in its environment caused by adaptations to a production process or to adapt the ML-based tool to data drift due to wear of mechanical tools in production devices.

An ML-based tool comprising a machine learning model (ML model) is applied in a source system, e.g., in the industrial environment to perform a task, e.g., for supervising a production process to detect irregularities. Note, that the approach is not limited to such a task and environment but is applicable also to ML-tools performing other tasks like monitoring task, a controlling task, preferably an anomaly detection, a quality control or a controlling of devices in automation plants, in building technology or distribution grid environments. The ML model is trained with sensor data collected in a source system.

The ML-based tool model works well in the source system but characteristics in the source system change forming a target system. E.g., a machine within the process is replaced and the novel machine has a different valid temperature range during production according to an underlying knowledge base. The proposed method identifies critical states where the prediction of the existing ML-based tool and the actual production process tend to disagree and reveals that most of such states correspond to situation where the novel machine reaches a temperature outside of the known range. Hence, the ML model of the ML-based tool only needs to be adapted to handle such temperature correctly which recovers optimal performance in an accurate and most efficient way by leveraging existing domain knowledge.

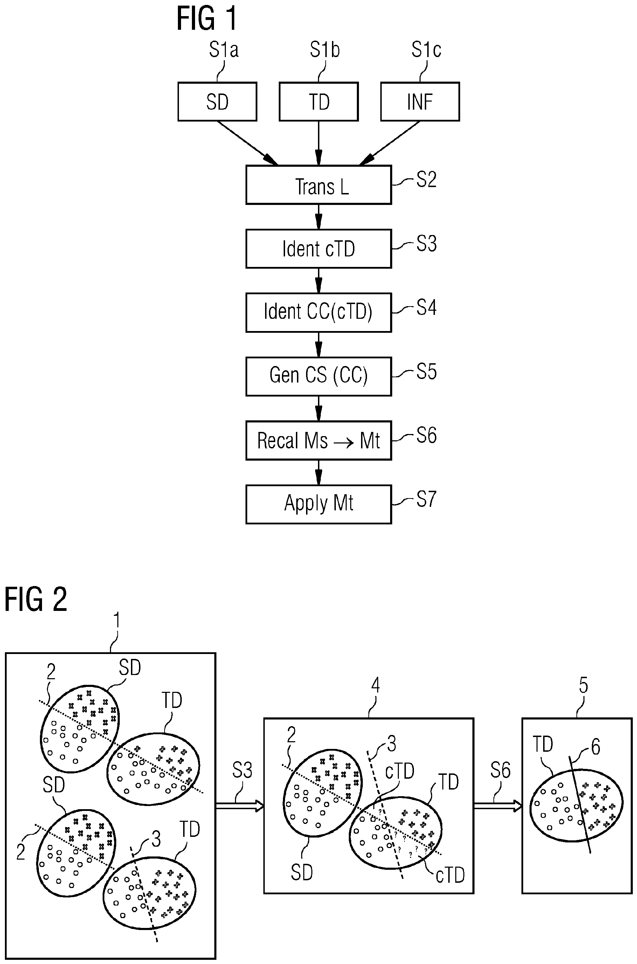

The proposed method to recalibrate the ML-based tool which is trained with sensor data collected from a source system is described in more detail below and illustrated in Fig.1.

In a first step S1, source data instances SD are received which are collected from the source system. The source data instances SD is either labelled training data which were used to train the ML-based tool for application in the source system and if there has not been any previous adaptation to the model. Alternatively, the source data instances SD are unlabelled data instances recorded in the current setting of the source system and labels are generated by the ML-based tool trained for the source system unlabelled source data instances SD as input.

Further, information about the at least one changed characteristic in the source system is received from system monitoring and/or control unit of the source system and/or target system. Target data instances TD are received, which were collected in a target system. The target system is configured with at least one changed characteristic compared to the source systems. Characteristics of the target system are, e.g., parameter settings which are different in the target system compared to the source system. Characteristics of the target system can be a new device in exchange of a device in the source system or the new device being added to the source system. Characteristic is also a wear degree of the source system. Characteristics can also be adapted process parameters such as a changed temperature or pressure setting.

Next in step S2, labels are transferred from the source data instances SD to the target data instances using a label transfer tool. Label transfer tools are one of optimal transport, unsupervised domain adaptation, or active domain adaptation methods.

Unsupervised domain adaptation (UDA) is a machine learning framework that aims to transfer knowledge from a labeled source domain to an unlabeled target domain. Such approaches typically use simple heuristics such as Optimal Transport or Correlation Alignment to estimate the missing labels in the target domain from labelled source data only and leverage these proxy labels to retrain a model.

Optimal transport is described, e.g., by Courty, Nicolas, et al. in "Optimal transport for domain adaptation." IEEE transactions on pattern analysis and machine intelligence 39.9 (2016): 1853-1865. Correlation Alignment as described by Sun, B., Saenko, K. (2016), in "Deep coral: Correlation alignment for deep domain adaptation.", Computer Vision-ECCV 2016 Workshops: Amsterdam, The Netherlands, October 8-10 and 15-16, 2016, Proceedings, Part III 14 (pp. 443-450). Springer International Publishing. However, these existing approaches are not able to incorporate domain knowledge in the form of process control data as available in industrial applications in the form of SCADA or MES systems. They are also prone to catastrophic forgetting as the model is typically trained on arbitrary target data and without additional constraints which limit the impact that adaptation could have on the model. Therefore, an adapted model via such techniques only might completely change its behavior and therefore needs to undergo all testing and verification stages again before it can be deployed.

In the next step S3 of our approach, critical target data instances are identified. These critical target data instances are characterized in that predictions generated by the ML-based tool for the critical target data instances mismatch with the transferred labels for the target data instances.

This is illustrated in Fig.2. The left part of area 1 shows predictions generated by the ML-based tool trained for the source system. As an example, the ML-based tool is assumed to be an anomaly detector predicting for input data either being in "normal mode" indicated by a circle or being in "anormal mode" indicated by an "x". The left upper bubble and left lower bubble are identical and show predictions of the ML-based tool when source data instances SD are input. The upper right bubble shows predictions of the ML-based tool trained for the source system when target data instances TD are input. A first decision boundary 2 separating data instances which lead to a first prediction, e.g., "normal mode" and data instances which lead to a second type of prediction, e.g., "anormal mode" is the same in both upper bubbles the predictions are generated by the same ML-based tool. The decision boundary is depended on the trained ML model of the ML-based tool.

The lower right bubble shows the predictions which are generated by transferring the labels, i.e., predictions using the label transfer tool. Here, the second decision boundary 3 shows a different orientation than the first decision boundary 2 of the ML-based tool trained for the source system. The second decision boundary 3 indicates a changed decision boundary of the underlying process.

Critical target data instances cTD are identified, see step S3, by selecting data instances where predictions generated by the ML-based tool for the target data instances mismatch with the transferred labels for the target data instances. In other words, those target data instances are identified to be critical target data instances which are based on disagreement of a first decision boundary 2 of the predictions generated by the ML-based tool for the target data and a second decision boundary 3 derived from the transferred labels, shown in area 4. The limited subset of critical target data instances in the new setting cannot reflect the entire complexity of the new setting and the transfer of labels is subject to uncertainty and errors.

Thus, in step S4 of the proposed method, see Fig.1, critical components, such as specific attributes or features, of the critical target data instances cTD are identified that lead to the mismatch in the model's decision. The at least one critical component of the critical target data instances cTD is identified using an Explainable AI method, preferably model-agnostic explainable AI methods, preferably one of Shapley Additive explanations SHAP, feature importance, Local Interpretable Model-Agnostic Explanations LIME. One example of this critical component might be a temperature change caused by producing a new product. The temperature is one component of the source and target data instance besides other components or features in the data instances, like a measured pressure, throughput, and further depending on the source and target system.

However, the changed characteristic in the target system, in our example the temperature change, might not be the only parameter that is influenced by this change. Further characteristics or features are adapted or changes implicitly in the target system and not all of these characteristics are harmful to the ML model's performance. By generating model explanations, e.g., using well-established and model-agnostic explainable AI techniques such as Shapley values, feature importance or Local Interpretable Model-Agnostic Explanations LIME, for the old and the new setting, a change in the explanations indicates which of the changes in the input data instances are actually changing the model behaviour. This difference in explanations being high for the temperature input deems it to be a critical component.

Thus in next step S5, a calibration signal CS is generated depending on the critical components CC of the critical target data instances cTD and the information INF about the changed characteristics in the target system, received from the system monitoring and/or control unit. Identified critical components cC are matched with the change in the process description to account for uncertainties in the label transport mentioned in step S2. This can for instance be realized by extracting the difference between the old and new process descriptions for the critical components in form of logical rules. In the example, the temperature is identified as a potential critical component cC for the degradation of the model trained for the source system and it is actually also indicated by the system monitoring and/or control unit that it is changed between the previous and the new setting.

The calibration signal CS is generated based on a match between identified critical components cC and known changes in the process description. This calibration signal CS might be given by an identifier for critical components cC that change the model's Ms behaviour and actually correspond to a described change in the production process. This calibration signal CS might be, that the change in the temperature parameter should have a reduced influence on the prediction of the model, as it is deliberately changed by the process and does not necessarily indicate an anomaly of the production process anymore.

In step S6, the ML-based tool Ms is recalibrated using the calibration signal CS resulting in a target ML-based tool Mt. The machine learning model is recalibrated using the calibration signal CS by removing or adapting the reasoning process of the model with respect to the critical component cC. Preferably a constrained optimization is applied to the ML-based tool Ms, i.e., the respective ML model, enforcing explanations of the ML model to keep constant outside of the critical components cC of the critical target data instance cTD whilst keeping performance on source data instances constant or using at least one Explanatory Interactive Learning (XIL) method. Explanatory Interactive Learning (XIL) method or Explainable Active Learning (XAL) consider the adaptation of trained machine learning models by interacting with explanations for a given prediction. Those interactions can be based on various different types of explanations such as simple or neuro-symbolic rules or just an image space.

More precisely, this can be realized by alternating training steps between an unconstrained optimization of the performance of the system on the non-critical target data instances and a constrained optimization on the critical target data cTD instances enforcing the explanations of the model to keep constant outside of the input components of the critical target data instance cTD identified by the calibration signal.

The recalibration results in the new target decision boundary 6, shown in area 5 of Fig. 2.

Finally, the target ML-based tool Mt is applied in the target system, see S7. The target ML-based tool Mt is applied in the target system by inputting sensor data instances collected in an operating target system and outputting predictions according to the task of the ML-based tool. The task of the ML-based tool remains the same for the ML-based tool trained for the source system and the target ML-based tool recalibrated for the target system.

In an embodiment the method steps are performed in predefined time intervals and/or when information about changed characteristic in the target system is received from the system monitoring and/or control unit.

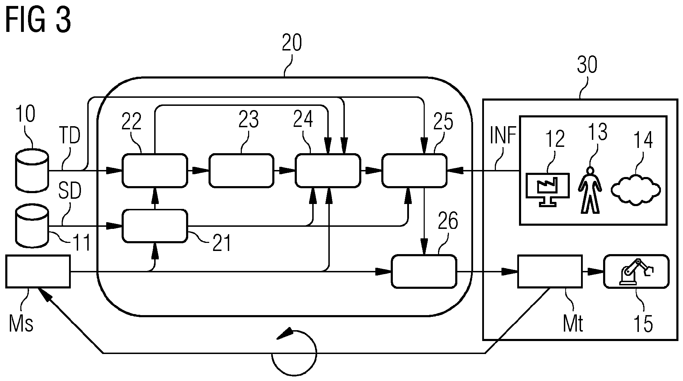

Fig. 3 schematically illustrates an embodiment of the inventive assistance apparatus 20 applied in an industrial environment.

The assistance apparatus comprises at least one processor configured to perform the method for autonomously recalibrating an ML-based tool Ms which is trained with sensor data collected from a source system and applied to perform a task in an industrial environment as described in detail above. The at least one processor is configured to form a surveillance interface configured to receive the information INF from a system monitoring and/or control unit 12. The assistance apparatus comprises a data interface configured to receive source data instances SD provided, e.g., by a database 11 from the source system and target data instances TD stored in a database 10 from the target system. These data interfaces are not depicted as separate units for the sake of clarity.

Additionally, the assistance apparatus 20 comprises a user interface configured for receiving at least one of domain knowledge for identifying critical components of the critical target data instances correlating with the information on the changed characteristics in the target system from a process expert 13 or knowledge base 14 of the industrial environment.

Description of the difference between the source system and new characteristics, like settings, in the target system is originated from the system monitoring and/or control unit e.g., SCADA or MES, a dedicated knowledge base 14, a retrieval-augmented generating system, or directly be described by a process expert 13. An example of this can be given by a Manufacturing Execution System MES providing information about the change in the produced product and associated adaptations of production parameters in the target system.

These production parameters can for example include the temperature of the soldering bath, where the temperature for the new product might be adapted because a lead-free soldering paste. However, this adaptation has unknown effects on the quality of the prediction of a machine learning-based tool performing the task to monitor the source/target system. For an ML-based tool performing a process monitoring task the mapping between the process parameters and the input parameters of the model might be a one-to-one mapping. However, for other settings domain knowledge is required to map the process input parameters to the affected parameters in the ML model input, e.g., in the case of monitoring a pressure tank the adaptation of the temperature must be mapped to a change in the resulting pressure which serves as an input to the ML-based monitoring system.

The assistance apparatus 20 is configured into functional units performing the steps of the method. There are a source label inferring unit 21, a label transfer unit 22, a critical instances identification unit 23 a transfer explanation extraction unit 24 and a calibration signal generation unit 25 which delivers the calibration signal to the calibration unit 26. Thus, the ML-based tool MS trained for the source system or already calibrated for the source system is recalibrated to the target ML-based tool Mt. The target ML-based tool Mt is adapted to provide reliable predictions when deployed to the target system 15.

The described computer-implemented method and the assistance apparatus respectively enables automatic adaptation of machine learning based tools to novel deployment circumstances in an efficient and tractable way. By this it allows to integrate ML-based tools more explicitly into the existing automation environment and paves the way towards a more autonomous factory. For the calibration only minimal amount of labelling of the target instances is required and it performs only the absolute crucial amount of adaptation to ensure that all general knowledge acquired by the ML model is not overwritten and merely the changes necessary to work well under the novel circumstances are internalized.

This can also enable to perform adaptation directly on edge devices, which is a significant benefit compared to existing approaches and can make the invention a valuable contribution to Siemens Edge Ecosystem. Since our solution constantly syncs with domain knowledge provided, for instance via the automation system or other knowledge sources it is also more trustworthy and responsible in general, which helps significantly to comply with upcoming regulations such as the EU Al-Act.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for autonomously recalibrating an ML-based tool (Ms) comprising a machine learning model which is trained with sensor data collected from a source system, comprising the steps:
- receiving (S1)
a) source data instances (SD) collected from the source system,
b) information (INF) about the at least one changed characteristic in the source system,
c) target data instances (TD) collected in a target system, the target system is configured with at least one changed characteristic compared to the source systems,
- transferring (S2) labels (L) from the source data in-stances (SD) to the target data instances (TD) using a label transfer tool,
- identifying (S3) critical target data instances (cTD) where predictions generated by the ML-based tool for the target data instances (TD) mismatch with the transferred labels for the target data instances (TD),
- identifying (S4) at least one critical component (cC) of the critical target data (cTD) instances that leads to the mismatch,
- generating (S5) a calibration signal (CS) depending on the critical component (cC) and the information (INF) about the changed characteristics in the target system,
- recalibrating (S6) the ML-based tool (Ms) using the calibration signal (CS) resulting in a target ML-based tool, and
applying (S7) the target ML-based tool in the target system (Mt).

2. Computer-implemented method according to claim 1, wherein the source system and the target system are applied to perform a task in an industrial environment, wherein the task is one of a monitoring task, a controlling task, preferably an anomaly detection, a quality control or a controlling of devices in an automation plant.

3. Computer-implemented method according to any of the preceding claims, wherein the information (INF) is received from a system monitoring and/or control unit (12) of the source system and/or target system.

4. Computer-implemented method according to any of the preceding claims, wherein the method steps are performed in predefined time intervals and/or when information about changed characteristic in the target system is received.

5. Computer-implemented method according to any of the preceding claims, wherein the source data instances (SD) are labelled training data, or the source data instances (SD) are unlabelled data instances and labels are generated by the ML-based tool trained for the source system.

6. Computer-implemented method according to any of the preceding claims, wherein label transfer tools are one of optimal transport, unsupervised domain adaptation, or active domain adaptation methods.

7. Computer-implemented method according to any of the preceding claims, wherein critical target data instances (cTD) are identified by selecting data instances based on disagreement between a first decision boundary (2) of the predictions generated by the ML-based tool for the target data instances (TD) and a second decision boundary (3) derived from the transferred labels (L).

8. Computer-implemented method according to any of the preceding claims, wherein the at least one critical component (cC) of the critical target data instances (cTD) is identified using an Explainable AI method, preferably model-agnostic explainable AI methods, preferably one of Shapley Additive explanations SHAP, feature importance, Local Interpretable Model-Agnostic Explanations LIME.

9. Computer-implemented method according to claim 8, wherein verifying relevance of the identified critical components (cC) by comparing the identified critical component (cC) with the information (INF) about changed characteristics.

10. Computer-implemented method according to any of the pre-ceding claims, wherein the recalibration is performed by adapting a reasoning process of the source Al-tool with respect to the critical component (cC), preferably by ap-plying a constrained optimization to the ML model enforcing explanations of the ML model to keep constant outside of the critical components (cC) of the critical target da-ta instance (cTD) whilst keeping performance on source da-ta instances (SD) constant.

11. Computer-implemented method according to any of the preceding claims, wherein the target ML-based tool is applied in the target system by inputting sensor data instances collected in the operating target system and outputting predictions according to the task.

12. Assistance apparatus comprising at least one processor configured to autonomously recalibrating an ML-based tool which is trained with sensor data collected from a source system and applied to perform a task in an industrial environment, comprising the steps:
- receiving (S1)
d) source data instances (SD) collected from the source system,
e) information (INF) about the at least one changed characteristic in the source system,
f) target data instances (TD) collected in a target system, the target system is configured with at least one changed characteristic compared to the source systems,
- transferring (S2) labels (L) from the source data in-stances (SD) to the target data instances (TD) using a label transfer tool,
- identifying (S3) critical target data instances (cTD) where predictions generated by the ML-based tool for the target data instances (TD) mismatch with the transferred labels for the target data instances (TD),
- identifying (S4) at least one critical component (cC) of the critical target data (cTD) instances that leads to the mismatch,
- generating (S5) a calibration signal (CS) depending on the critical component (cC) and the information (INF) about the changed characteristics in the target system,
- recalibrating (S6) the ML-based tool (Ms) using the calibration signal (CS) resulting in a target ML-based tool, and
applying (S7) the target ML-based tool in the target system (Mt).

13. Assistance apparatus according to claim 12, comprising
a surveillance interface configured to receive the information from a system monitoring and/or control unit (12), and
a data interface configured to receive source data in-stances (SD) from the source system and target data in-stances (TD) from the target system, wherein the target system is configured with changed characteristics compared to the source systems.

14. Assistance apparatus according to claim 12 or 13, comprising a user interface configured for receiving at least one of domain knowledge for identifying critical components (cC) of the critical target data instances (cTD) correlating with the information (INF) on the changed characteristics in the target system.

15. A computer program product directly loadable into an in-ternal memory of at least one digital computer, comprising software code portions for performing the steps of claims 1 and 11 when said product is run on said at least one digital computer.
